# EUROPEAN PATENT APPLICATION

(11) **EP 1 080 860 A1**
(43) Date of publication of application: **07.03.2001**
(21) Application number: 00307406.9
(22) Date of filing: 29.08.2000
(51) Int. Cl.: B29C 31/02, B29C 31/04, B29B 13/02, B29B 15/02, C08J 3/12, B65G 53/04

(54) **Process for bulk handling granular polybutadiene**

(30) Priority: 31.08.1999 US 386720
(71) Applicant: UNION CARBIDE CHEMICALS & PLASTICS TECHNOLOGY CORPORATION, Danbury, Connecticut 06817-0001 (US)
(72) Inventor: Lan, Yidan, New Providence, New Jersey 07974 (US); Wang, Duan-Fan, Somerville, New Jersey 08876 (US); Williams, Gary Harry, Flemington, New Jersey 08822 (US)
(74) Representative: Hayes, Adrian Chetwynd

(57) **Abstract**

The invention provides a method for bulk handling of granular polybutadiene comprising heating granular polybutadiene that has reached a temperature at or below 35°C to a temperature ranging from about 50°C to 70°C in order to restore free-flowability.

## Description

### Field of the Invention

The present invention relates to the production of granular polybutadiene such as that produced in a fluidized and/or gas phase polymerization process. More particularly, the invention relates to post-reaction handling and/or bulk material handling of granular polybutadiene to ensure flowabiity.

### Background of the Invention

Commercially, polybutadiene is produced in liquid processes such as solution/slurry processes. These liquid and/or liquid-solid processes do not require nor use inert particulate materials. In these processes the polybutadiene is produced as a solid in a slab or bale form. The slabs or bales must be broken-up by grinding or pulverization techniques before the polybutadiene can be fed into a mixer at the end user's location which is a time and energy-consuming.

Polybutadiene produced in a gas phase process, such as those disclosed in U.S. Patent Nos. 4,994,534 and 5,453,471; or WO 96/04323 (PCT/US95/09826) and WO 96/04324 (PCT/US95/09827), is granular as formed in the reactor. The particles of polybutadiene produced in these gas phase processes are generally produced by employing an inert particulate material in the reactor in order to maintain the bed of forming polymer fluidizable. As such, the polybutadiene particles that result from gas phase processes have a core-shell composition. The core is composed of a mixture of mostly of polymer with minor amounts of inert particulate material. The outside layer or shell is composed of a mixture of mostly inert particulate material with minor amounts of polymer. Since the majority of the polymer is surrounded by inert particulate material, the product produced in these gas phase processes is granular and free-flowing. It does not need or require subsequent grinding or pulverizing to be employed by an end-user; thus, it is cheaper and easier to manufacture and compound.

However, in this core-shell polybutadiene upon standing or settling the polymer in the core has a tendency to migrate into the shell. When sufficient polymer migrates into the outer shell over time the above-described agglomeration phenomenon can occur. This results in bulk handling problems during discharge, transportation, unloading, and storage.

Since the granular particle of polybutadiene produced in gas phase processes is physically, structurally, and compositionally different from that produced by liquid processes, it requires the development of its own bulk handling methods.

In order to improve the flow properties of granular polymers, typical methods employed in the past for polymers have included those such as decreasing (cooling) the handling temperature and/or using mechanical vibration, agitation or air-blasting. Accordingly, there is an on-going need to develop new methods for bulk handling of granular polybutadiene such as that produced in a gas phase process on a commercial scale.

U.S. Serial No. 09/313,601 discloses a preventive method for bulk handling granular material such that it is maintained in a free-flowing state. This method comprises loading the granular material into a vessel equipped with a gas distributor at or near the bottom of said vessel and a discharge means in the bottom of said vessel and injecting a gas that is inert to said granular material upwardly through the gas distributor and through the granular material at a gas velocity that is equal to or slightly below the minimum fluidization velocity of said granular material in the vessel. In this reference, having a gas velocity equal to or below the minimum fluidization serves to provide uniform gas distribution inside the vessel or container using a small volume of gas. Heating of the gas is optional. This reference discloses that particles separated by an air layer will not stick together.

In contrast, the present invention relates to restoring the free-flowability of polybutadiene once it has been allowed to settle or compact. This is based on the discovery by the instant inventors that the flowability of polybutadiene is surprisingly improved or restored by heating to a higher temperature. This is the opposite of what skilled in art would surmise because the flowability of other similar polymers is not restored by heating but rather by cooling to lower temperatures. The present process requires that the polybutadiene be heated in some manner. One way is to heat the polybutadiene with a heated gas that is circulated at a superficial gas velocity above a minimum fluidization velocity in order to fluidized the granular polybutadiene and to restore flowability to the polymer.

### Summary of the Invention

Surprisingly, there is provided a method for bulk handling of granular polybutadiene that has been in a vessel at a temperature at or below 35°C, comprising heating said polybutadiene to a temperature ranging from about 50°C to 70°C.

### Detailed Description of the Invention

In the present invention, it has been discovered that polybutadiene, especially that which has been produced in the gas phase, flows better at higher temperatures, rather than lower temperatures. This is the opposite of what one might expect, since similar polymers have a strong tendency to agglomerate at higher temperatures.

The invention ensures that bulk granular polybutadiene (e.g., high cis-1,4-polybutadiene, abbreviated as BR) is free-flowing and does not agglomerate during transportation, storage or processing. It produces a free-flowing product on demand for the end-user. The invention is a method for bulk handling of granular polybutadiene comprising heating granular polybutadiene that has been stored at a temperature at or below 35°C to a temperature ranging from about 50°C to 70°C in order to retain or restore free-flowabiity.

Typically the granular polybutadiene of preference is produced in gas phase processes including the so-called "conventional" gas phase processes, "condensed-mode," and, most recent, "liquid-mode" processes. In these processes, it is desirable to include a scavenger in the reactor to remove adventitious poisons such as water or oxygen before they can lower catalyst activity. In general, these gas phase polymerizations are conducted at or above the sticking (softening) temperature of the forming polymer.

Conventional fluidized processes are disclosed, for example, in U.S. Patent Nos. 3,922,322; 4,035,560; 4,994,534, and 5,317,036.

Condensed mode polymerizations, including induced condensed mode, are taught, for example, in U.S. Patent Nos. 4,543,399; 4,588,790; 4,994,534; 5,317,036; 5,352,749; and 5,462,999.

Liquid mode or liquid monomer polymerization mode is described in U.S. Patent No. 5,453,471; WO 96/04323 (PCT/US95/09826); and WO 96/04323 (PCT/US95/09827). For diolefin (e.g., 1,3-butadiene) polymerization, it is preferable to use liquid mode and to employ an inert particulate material, a so-called fluidization aid or flow aid.

Inert particulate materials are described, for example, in U.S. Patent No. 4,994,534 and include carbon black, silica, clay, talc, and mixtures thereof. Organic polymeric materials (e.g., polymers and copolymers of an alpha olefin and polystyrene, in granular or powder form) can also be employed as fluidization aids. Of these, carbon black, silica, and mixtures of them are preferred. Activated carbon as disclosed in EP 0 727,447 and modified carbon black as disclosed in WO 98/34960 can also be employed in the gas phase polymerization. When employed as fluidization aids, these inert particulate materials (carbon black, silica, clay, talc, and mixtures thereof) are used in amounts ranging from about 0.3 to about 80% by weight, preferably about 5 to 60%, most preferably 10 to 45%, based on the weight of the polymer produced. Organic polymeric materials are employed in amounts ranging from 0.3 to 50%, preferably 0.3 to 10% by weight based upon the weight of the final polymer produced.

The polybutadiene polymer produced with one or more of these fluidization aids typically produces a core-shell polymer particle. The particle has an outer shell of inert particulate material or a mixture of a polymer and an inert particulate material, wherein the inert particulate material is present in the outer shell in an major amount, generally higher than 75% by weight based on the weight of the outer shell. The inner core of the polymer particle is comprised of polymer or a mixture of inert particulate material and polymer, wherein the polymer is present in the inner core in an major amount, generally higher than 90% by weight based on the weight of the inner core. These polymer particles are granular and free-flowing upon exiting the reactor and are produced by a fluidized bed polymerization process.

The bulk properties of granular polybutadiene, such as particle size distribution, bulk density, and flowability are related to the catalyst/cocatalyst system, monomer partial pressure, reactor temperature, and residence time. For example, BR produced from the same catalyst but different cocatalyst may differ in bulk density, average size and flowability. In general, the granular polybutadiene employable in the invention has an average particle size ranging from about 400 to 1000 microns; a bulk density ranging from about 15 to 20 lb/ft³; and a flowability value (flow function) of about 1.5 to 4. Also, BR, which is free-flowing as discharged from a fluidized reactor, can change in particle size distribution and flow properties due to agglomeration. When, for example, carbon black is used as the fluidization aid (flow aid or inert particulate material) in the production of BR, the polymer in the core of the polymer particle with time can migrate into the outer carbon black coating of the shell of the polymer particle. As the BR polymer migrates or penetrates the outer carbon black coating during storage and transport, the surface of the particle contains more and more polymer which only increases tackiness and the tendency to agglomerate.

Granular polybutadiene that has been stored (e.g, in a vessel such as a hopper car, storage bin or silo) or has been cooled at a temperature at or below 35°C is contacted with an inert gas that has been heated to a temperature ranging from about 50 degrees C to about 70 degrees C.

The gas employed in the practice of the invention can be any gas which is substantially inert to both the polymer and any unreacted monomers associated with the polymer, if any are present. Hence, the inert gas can be selected from the group consisting of nitrogen, argon, air, carbon dioxide, carbon monoxide, and mixtures thereof. Preferably, the inert gas employed is nitrogen, air, or a mixture thereof.

The purpose of introducing inert gas into the storage vessel is to warm the polymer. Therefore, the amount and velocity of the inert gas can be very small. The inert gas can be introduced to the polybutadiene through opening in the walls of the vessel containing it and allowed to disperse throughout the polymer. It can also be piped into and discharged via a pipe or conduit inserted in the vessel and allowed to disperse throughout the polybutadiene. The gas can then be discharged via the top or sides of the vessel or via a pipe. Optionally, the inert gas can be collected, recycled, purified if needed, and reused.

When the granular polybutadiene has to remain in a reactor, purger, or storage vessel for an extended period of time, the inert gas, preferably ranging in temperature from 50 to 70°C, should be used to keep the bed fluidized. In general, the velocity of the inert gas depends on the particle size or size of aggregates of the polybutadiene and should be sufficient to dislodge the agglomerates into smaller aggregates or particles. It has been found that the velocity of the inert gas can range from about 0.5 to about 4 ft/sec, preferably about 01.5 to about 3 ft/sec, and most preferably 1.8 to 2.5 ft/sec.

As an alternative approach to heating the polymer in the above manner, the polybutadiene can be pneumatically conveyed by the inert gas which has been or is heated to a temperature ranging from about 50 degrees C to about 70 degrees C.

Also, the polybutadiene can be heated via microwaves or a heat gun to a temperature ranging from about 50 degrees C to about 70 degrees C, preferably in the presence of an inert gas. This technique is particularly useful for dislodging polybutadiene that has been stored in bulk bags. In general, the polybutadiene is contacted with microwaves or a heating gun using known techniques. The contact preferably occurs while the polybutadiene is in the vessel.

The method of the invention can be employed in combination with one or more handling techniques such the use of mechanical vibration, agitation or air-blasting.

All references cited herein are incorporated by reference. The following examples are given to illustrate the invention and are not necessarily intended as limitations thereof. All parts and percentages in the specification including the examples are by weight unless otherwise specified.

### EXAMPLES

The following examples will further illustrate the invention.

Example 1: Demonstration of the temperature-related behavior in BR Fluidization. A columnar vessel made of PLEXIGLAS® with an inner diameter of 6.5 inches and height of 6 feet was connected to a conical section through which the fluidization gas was introduced. The column and the cone were separated by a distributor plate, which was uniformly perforated. Compressed air, heated in a temperature-controlled heater was used as the fluidization gas. The bed temperature was monitored by a thermocouple in the middle of the bed depth.

An aged granular polybutadiene that had an average particle size of 1003µ and aerated bulk density of 15.93 lb/ft³ was loaded into the bed. The bed was settled at 23°C for 15 hours before testing. Hot air (50°C) was used to warm the polybutadiene. In this test the superficial gas velocity (SGV) was kept at 1.58 ft/s all the time. Only ballistic particles were observed when the bed temperature was below 25°C. As the temperature increased to 26°C, some channels formed around the wall. Channels increased while spreading to the central bed as the bed temperature went up to 33°C. The whole bed turned to spouting at 37°C. The onset of fluidization occurred when bed temperature was at 43°C. The bed was completely fluidized at 50°C.

Example 2: The SGV decreased as bed temperature increased. The same polymers and device as in Example 1 were used to measure the minimum gas velocity required to completely fluidize the bed under different temperatures. Starting at 25C, the bed of BR could not fully fluidized even at a high SGV of 1.8 ft/s. Only channeling or cracking was observed. When the bed was heated to 35°C, spouting occurred with a SGV f 1.56 ft/s. No evidence of complete fluidization was seen after 10 minutes of spouting. Increasing the SGV further to 1.8 ft/s did not fluidize the bed. When bed temperature was increased to 40°C, the onset of fluidization was observed at a SGV of 1.56 ft/s, and bed was fully fluidized with a SGV of 1.66 ft/s. The minimum gas velocity required for a complete fluidization was decreased to 1.4 ft/s when the bed and gas temperature were at 50C. At 58°C∼70°C, the bed could maintain fluidization at a smaller gas velocity of 1.28∼1.30 ft/s.

Example 3: The same polymer and same bed conditions as in Example 1 were tested for long-time settling of 12 days. When cold gas (25°C) was used, the bed was lifted as a plug, and then cracked down. High SGV only generated a few channels when gas passed through the cracks. The bed behavior changed suddenly when hot air (60°C) was introduced at a SGV of 1.58 ft/s. First spouting was observed around the wall, then the whole bed was spouting. Complete fluidization was observed in 3 minutes after the hot air was used.

It can be seen from Examples 1, 2 and 3 that temperature is an important factor for fluidization. With the same superficial gas velocity, the behavior of the bed was quite different under different temperatures. It was observed that the cohesive force and size of agglomerate particle had been greatly influenced by the temperature. In room temperature (around 25∼30°C), BR acted like a group C powder, whereby high velocity gas can only form channels or cracks. But when the bed was heated to above 40∼45°C, BR behaved like a group B powder. Bubbling and spouting started at the minimum fluidation velocity (U_{mf}). Fluidization was achieved without difficulty. Time consolidation was not considered as a major factor comparing to the temperature influence which has been shown in Example 3.

Example 4: Operation Method Applied to Bulk Bag Handling. A small plastic bag similar in shape to a bulk bag containing 6 pounds of granular BR, was hooked up for 24 hours. BR was observed caking inside the bag and could not be discharged when the bottom of the bag was opened. Mechanical shaking did not help, but compacted the polymer further. Then the heating method was applied.

Upon insulating in a cardboard box, the polymer bag was heated to 50°C by a 1500W heat gun. After warming up for 30 minutes, the polymer became free flowing and was discharged successfully with gravity. This method can be scaled up to real bulk bags or supersack handling cases. To save energy, it is recommended to hook the bulk bag in a insulated space just a little bit larger than the bag and introduce hot air to warm the bag before discharge. A similar method has been tested on hopper discharging.

Example 5: Adding Extra Carbon Black Only Delayed the Agglomeration Progress. Starting with a caked polybutadiene sample at 25°C, the lumps were first broken up by a blender, and then mixed with different amounts of extra carbon black (N650). A total of six jars of polymers were prepared with 0.5% wt. to 3% wt. of carbon black, respectively. It was found that all samples were free-flowing after blending, but the polymers with 2.5% and 3% by weight of extra carbon black showed a better flowability. The jars were then stored at room temperature without disturbance for different time periods. At the end of the 4 hours storage the sample with 0.5% CB became fluff-like material and started to agglomerate. After 8 hours, samples with extra 1% and 1.5% by weight carbon black began to agglomerate, and that with 0.5% by weight extra carbon black turned to lumps, while samples with 2%, 2.5% and 3% by weight of carbon black were still free flowing. After 18 hours, all samples, except samples with 2.5% and 3% by weight of carbon black caked. When the caked samples were put into an oven, those having more extra carbon black became free-flowing faster than those having less carbon black.

These tests showed that the dusted carbon black acted as a temporary lubricant to delay the agglomeration, but after carbon black was absorbed by BR polymers, the surface of particle became sticky again. Adding extra carbon black was not a good way of preventing agglomeration of granular BR polymer.

## Claims

1. A method for bulk handling of granular polybutadiene that has been in a vessel at a temperature at or below 35°C, comprising heating said polybutadiene to a temperature ranging from 50°C to 70°C.

2. The method of Claim 1 wherein the polybutadiene is heated to a temperature ranging from 50°C to 70°C by means of contacting the polybutadiene with a gas maintained at a temperature ranging from 50 to 70°C and wherein the superficial gas velocity of the inert gas ranges from 0.15 to 1.2 m/s (0.5 to 4 ft/s).

3. The method of Claim 2 wherein the gas is employed in pneumatic conveying of said granular polybutadiene.

4. The method of Claim 2 wherein the gas is employed to re-fluidized said granular polybutadiene.

5. The method of any one of claims 2 to 4 wherein the gas is selected from the group consisting of nitrogen, argon, air, carbon dioxide, carbon monoxide, and mixtures thereof.

6. The method of Claim 5 wherein the gas is selected from the group consisting of air, nitrogen, and a mixture thereof.

7. The method of any one of the preceding claims wherein the polybutadiene is heated by means of microwaves.

8. The method of any one of claims 1 to 6 wherein the polybutadiene is heated by means of a heating gun.

9. The method of any one of the preceding claims wherein the polybutadiene employed has been previously produced in a gas phase process.

10. The method of claim 9 wherein the gas phase process is conducted in the presence of 0.3 to 80 percent by weight based on the final polybutadiene product produced of an inert particulate material selected from the group consisting of carbon black, silica, clay, talc, and mixtures thereof.
